(19) Europäisches Patentamt
European Patent Office
Office européen des brevets

(11) **EP 3 032 830 A1**

(12) **EUROPEAN PATENT APPLICATION**

(43) Date of publication:
**15.06.2016 Bulletin 2016/24**

(51) Int Cl.:
**H04N 19/11** (2014.01)  **H04N 19/14** (2014.01)
**H04N 19/176** (2014.01)  **H04N 19/463** (2014.01)

(21) Application number: **14306968.0**

(22) Date of filing: **08.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Thoreau, Dominique**
  **35576 Cesson-Sévigné (FR)**

• **Alain, Martin**
  **35576 Cesson-Sévigné (FR)**
• **Le Pendu, Mikaël**
  **35576 Cesson-Sévigné (FR)**
• **Turkan, Mehmet**
  **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Differential coding of intra modes**

(57)   A method of encoding a video image includes, for each one of blocks of the video image, calculating virtual gradient values in the block depending on neighboring gradient values computed in a causal neighborhood of the block and acquiring one prediction direction or non-directional intra prediction mode based on the virtual gradient values; and determining a coding mode by comparing different predictions for the block , acquiring a predicted block by applying the determined "coding mode", acquiring a residual error between the predicted block and the current block and encoding a difference between the determined coding mode and the prediction direction or non-directional intra prediction mode. The calculating includes, for each prediction direction, propagating the neighbouing gradient values along the prediction direction to estimate the virtual gradient values in the block.

FIG.11

**Description**

FIELD

The present invention generally relates to a method of encoding a video image, a method of decoding an encoded video image, apparatus for encoding a video image and apparatus for decoding an encoded video image.

BACKGROUND

In the H.264 (see "MPEG-4 AVC/H.264 document ISO/IEC 14496-10") and HEVC (see "B. Bross, W.J. Han, G. J. Sullivan, J.R. Ohm, T. Wiegand JCTVC-K1003, "High Efficiency Video Coding (HEVC) text specification draft 9," Oct 2012" and "G.Sulivan, J.Ohm, W.J Han, T. Wiegand "Overview of the High efficiency Video Coding (HEVC) standard", TCSVT 2012 (http://iphome.hhi.de/wiegand/ assets/pdls/2012_12_IEEE-HEVC-Overview.pdf') standards, respective 9 and 35 intra prediction modes can be used. The coding in the mode is based on the prior calculation of the Most Probable Mode (MPM) determined according to the modes selected prior to the current block being coded.

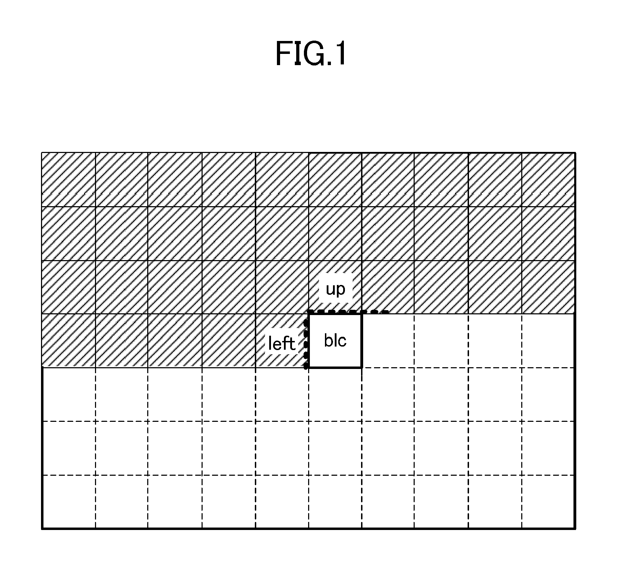

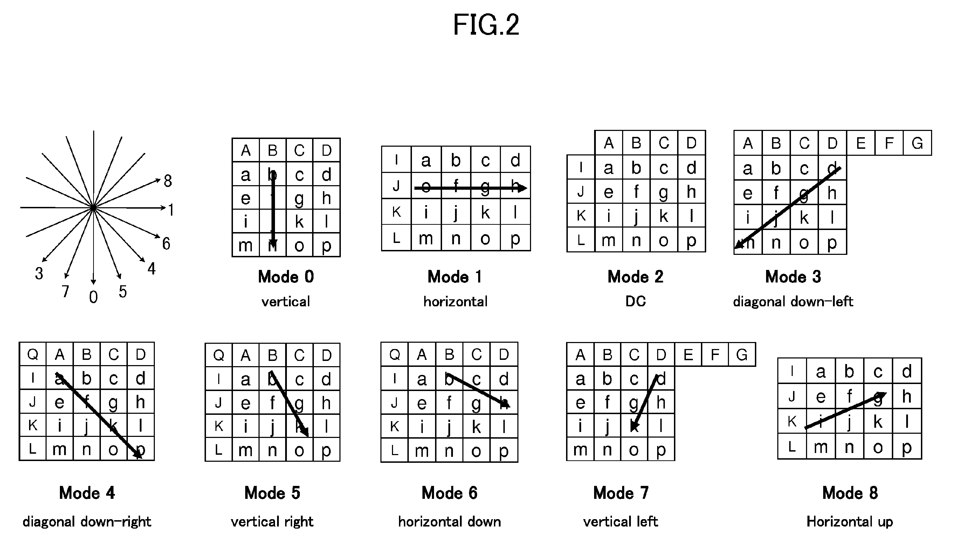

In the H.264 standard, Intra4×4 and Intra8×8 predictions correspond to a spatial estimation of the pixels of the current block to be coded ("blc" in FIG. 1) based on the neighboring reconstructed pixels. The H.264 standard specifies different directional prediction modes in order to elaborate the pixels prediction. Nine intra prediction modes are defined on 4×4 and 8×8 block sizes of the macroblock (MB). As described in FIG. 2, eight of these modes consist of a 1D directional extrapolation based on the pixels (left column and top line) surrounding the current block to predict. The intra prediction mode 2 (DC mode) defines the predicted block pixels as the average of available surrounding pixels.

In the intra4×4 mode prediction of H264, the prediction depends on the reconstructed neighboring pixels as illustrated with FIG. 1.

Note that in FIG. 1, "blc" denotes the current block to encode, the hatched zone corresponds to the reconstructed pixels or causal zone, the remaining of the picture (image) is not yet encoded, and the pixels of left column and top line inside the causal part are used to carry out the spatial prediction.

Concerning the intra 4×4 prediction, the different modes are illustrated in FIG. 2.

These 4×4 predictions are carried out as follows, for example:

In the mode 1 (horizontal), the pixels "e", "f", "g", and "h" are predicted with the reconstructed pixel "J" (left column).
In the mode 5, for example, "a" is predicted by (Q+A+1)/2, and "g" and "p" are predicted by (A+2B+C+2)/4.

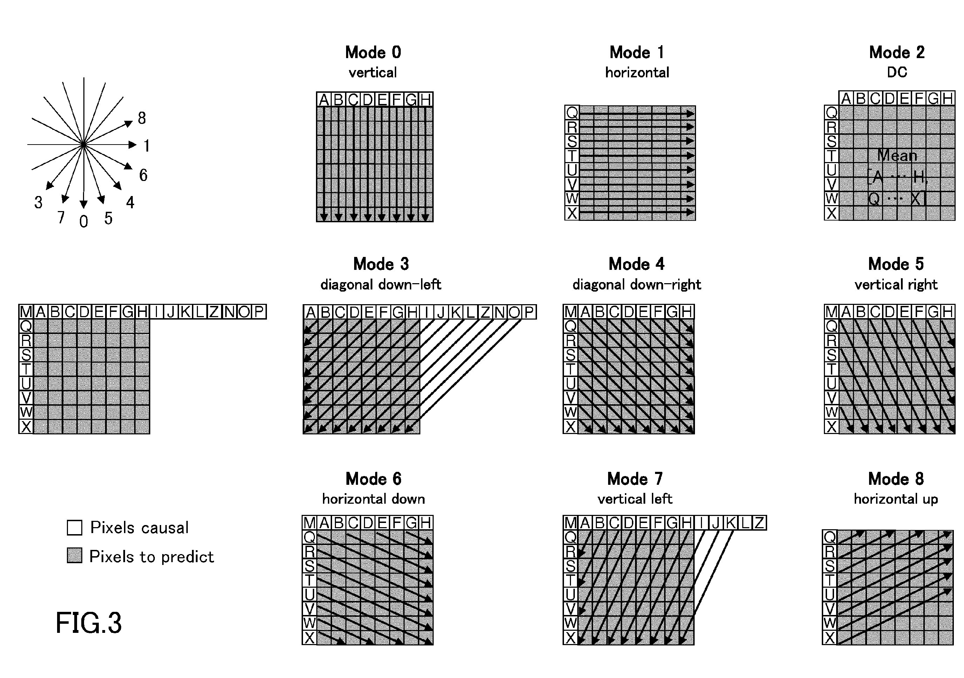

Similarly, FIG. 3 illustrates the principle of intra 8×8 predictions.

These 8×8 predictions are carried out as follows, for example:

Note that "$p_{rd}(i,j)$", shown below, denotes the pixels to predict of the current block, coordinates line and column (i,j). The first pixel of indexes (0,0) is the top-left one in the current block.
In the mode 1 (horizontal), for example, the pixels $p_{rd}(0,0)$, $p_{rd}(0,1)$, ... and $p_{rd}(0,7)$ are predicted with the reconstructed "Q" pixel.
In the mode 5, for example, $p_{rd}(0,0)$ is predicted by (M+A+1)/2, and also, $p_{rd}(1,2)$ and $p_{rd}(3,3)$ are predicted by (A+2B+C+2)/4.

The intra prediction is then performed using the different prediction directions. After the residue, i.e., the difference between the current block and the predicted block, is frequency transformed (DCT), quantized and finally encoded, it is sent out. Before the encoding process, from the nine prediction modes available, the best prediction mode is selected. For direction prediction, the SAD (Sum of Absolute Difference) measure computed between the current block to encode and the block predicted can be used, for example. Obviously, the prediction mode is encoded for each sub partition.

In the H.264 standard, the MPM corresponds to the minimum of the indexes of the intra coding modes of the "left" and "up" blocks (see FIG. 1). If the intra coding mode of a neighboring block is not available, the DC mode (index = 2), as default, is assigned to the current block.

Concerning the MPM in the HEVC standard, the following is extracted from the above-mentioned reference: G.Sulivan, J.Ohm, W.J Han, T. Wiegand "Overview of the High efficiency Video Coding (HEVC) standard", TCSVT 2012 (http://iphome.hhi.de/wiegand/assets/pdfs/ 2012_12_IEEE-HEVC-Overview.pdf, page 1658 columns 1 and 2,

"7) Mode Coding:

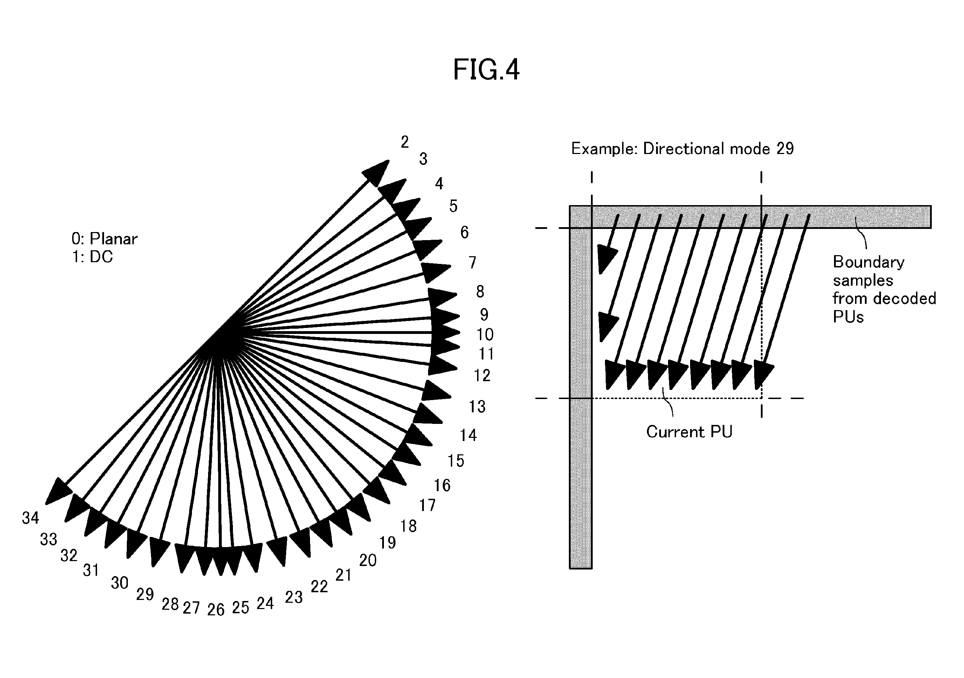

HEVC supports a total of 33 Intra-Angular prediction modes and Intra-Planar and Intra-DC prediction modes for luma prediction for all block sizes (see FIG. 4). Due to the increased number of directions, HEVC considers three most probable modes (MPMs) when coding the luma intrapicture prediction mode predictively, rather than the one most probable mode considered in H.264/MPEG-4AVC.

Among the three most probable modes, the first two are initialized by the luma intrapicture prediction modes of the above and left PBs if those PBs are available and are coded using an intrapicture prediction mode. Any unavailable prediction mode is considered to be Intra-DC. The prediction block (PB) above the luma coding tree block (CTB) is always considered to be unavailable in order to avoid the need to store a line buffer of neighboring luma prediction modes.

When the first two most probable modes are not equal, the third most probable mode is set equal to Intra-Planar, Intra-DC, or Intra-Angular (of index) [26] (vertical), according to which of these modes, in this order, is not a duplicate of one of the first two modes. When the first two most probable modes are the same, if this first mode has the value Intra-Planar or Intra-DC, the second and third most probable modes are assigned as Intra-Planar, Intra-DC, or Intra-Angular[26], according to which of these modes, in this order, are not duplicates. When the first two most probable modes are the same and the first mode has an Intra-Angular value, the second and third most probable modes are chosen as the two angular prediction modes that are closest to the angle (i.e., the value of k) of the first.

In the case that the current luma prediction mode is one of three MPMs, only the MPM index is transmitted to the decoder. Otherwise, the index of the current luma prediction mode excluding the three MPMs is transmitted to the decoder by using a 5-b fixed length code.

For chroma intrapicture prediction, HEVC allows the encoder to select one of five modes: Intra-Planar, Intra-Angular[26] (vertical), Intra-Angular[10] (horizontal), Intra-DC, and Intra-Derived. The Intra-Derived mode specifies that the chroma prediction uses the same angular direction as the luma prediction. With this scheme, all angular modes specified for luma in HEVC can, in principle, also be used in the chroma prediction, and a good tradeoff is achieved between prediction accuracy and the signaling overhead. The selected chroma prediction mode is coded directly (without using an MPM prediction mechanism)."

According to International Publication No. WO 2010/102935 A1, the MPM estimation is partially based on gradient acquired from the causal neighbor using convolution filters.

## SUMMARY

According to one aspect of the present invention, a method of encoding a video image includes, for each one of blocks of the video image, calculating virtual gradient values in the block depending on neighboring gradient values computed in a causal neighborhood of the block and acquiring one prediction direction or non-directional intra prediction mode based on the virtual gradient values; and determining a coding mode by comparing different predictions for the block, acquiring a predicted block by applying the determined "coding mode", acquiring a residual error between the predicted block and the current block and encoding the residual error and a difference between the determined coding mode and the prediction direction or non-directional intra prediction mode. The calculating includes, for each prediction direction, propagating the neighboring gradient values along the prediction direction to estimate the virtual gradient values in the block.

## BRIEF DESCRIPTION OF THE DRAWINGS

FIG. 1 illustrates spatial prediction;
FIG. 2 illustrates intra $4\times4$ prediction;
FIG. 3 illustrates intra $8\times8$ prediction;
FIG. 4 illustrates intra prediction modes according to the HEVC standard;
FIG. 5 illustrates 2D convolution windows;
FIG. 6 illustrates a causal neighbor;
FIG. 7 illustrates gradients of a casual neighbor for a given direction d;
FIG. 8 illustrates virtual $8\times8$ prediction (or extrapolation) blocks $Gr_d$ ($Gr_0$, $Gr_1$, $Gr_2$, $Gr_3$, $Gr_4$, $Gr_5$, $Gr_6$, $Gr_7$ and $Gr_8$);
FIG. 9 illustrates prediction of a current block;
FIG. 10A is a flowchart illustrating a process at an encoder side according to the present embodiment;
FIG. 10B is a flowchart illustrating a process at a decoder side according to the present embodiment;
FIG. 11 is a flowchart illustrating a process of Step S100 shown in FIG. 10;
FIG. 12 is a flowchart illustrating a process of Step S130 shown in FIG. 11 in a case of applying a manner of the H.264 standard;
FIG. 13 is a flowchart illustrating a process of Step S130 shown in FIG. 11 in a case of applying a manner of the HEVC standard according to a first solution;
FIG. 14 is a flowchart illustrating a process of Step S130 shown in FIG. 11 in a case of applying a manner of the HEVC standard according to a second solution;
FIG. 15 is a block diagram illustrating an encoder according to the embodiment; and
FIG. 16 is a block diagram illustrating a decoder according to the embodiment.

DESCRIPTION OF EMBODIMENTS

A preferred embodiment of the present invention will be described with reference to the accompanying drawings.

An objective of the present embodiment is to improve the video coding performance by keeping the same quality for a lower bit-rate. The objective is to implement a tool to be used in an encoder and a decoder that provide such a coding advantage.

What is addressed here is a problem of estimation of the prediction mode for intra (or spatial) mode in the context of image and video coding.

In the H.264 and HEVC standards, as mentioned above, respectively 9 and 35 intra prediction modes can be used. The coding in the mode is based on calculation of the Most Probable Mode (MPM) determined according to the modes selected prior to the current block being coded.

According to the present embodiment, by better estimation of an MPM, it is possible to reduce the coding cost of the current mode (dedicated to the current block).

Thus, according to the present embodiment, it is possible to improve the estimation of the intra coding mode of the current block, and then, the efficiency of the MPM.

The calculation of the MPM according to the H264 and HEVC standards is very simple (low computation cost) but can be improved. An improvement was proposed in the above-mentioned reference, i.e., International Publication No. WO 2010/102935 A1, where the neighbor of the current block is analyzed using a directional gradient filter. In this technology, a restrictive area around the current block (causal part) is used where a lot of reconstructed pixels are not considered (see the L-zone in FIG. 3 of the reference) even though they can be used in the prediction, for example, the modes 3 and 7 in a case of H.264 and the modes 27 to 34 in a case of HEVC.

In addition, in this technology, the impact of a potential extrapolated contour is not analyzed in the area of the current block.

According to the present embodiment, it is possible to improve the MPM estimation so as to reduce the coding cost (or bit rate) with a reasonable complexity.

The present embodiment consists in computing the MPM based on surrounding causal pixels using directional gradient filters by:

a) calculating for the current block (to encode) values that depend on directional gradient values computed in a causal (or decoded) neighborhood of the block; and
b) encoding the current block.

The Step b includes encoding the texture of the block according to a given spatial prediction mode; and encoding the index of the prediction mode differentially to a predictor named Most Probable Mode (MPM).

The Step a includes, for the current block:

a1) computing, for a prediction direction, gradient values in the causal neighborhood;
a2) determining a virtual gradient prediction block by propagating the gradient values along the prediction direction;
a3) determining an energy value from the propagated gradient values of the virtual gradient prediction block;
a4) repeating Steps a1 to a3 for each prediction direction, i.e., 8 directions in a case of H264 and 33 direction in a case of HEVC;
a5) determining the highest energy value, the highest energy value giving the predictor or MPM dedicated to the current block as a coding mode therefor.

Note that Step a (then Steps a1 to a5) is also implemented in the decoder side.

Steps a2 to a5 represent an objective of the embodiment, the Step a1 being partially included in the above-mentioned reference, i.e., International Publication No. WO 2010/102935 A1.For intra prediction according to each intra prediction mode, the encoder uses the condition of the MPM with a flag to signal the intra prediction mode. If the MPM is the same as the intra prediction mode, the flag is set to "1" and only one bit is needed to signal the intra prediction mode. When the MPM and the intra prediction mode are different, the flag is set to "0" and additional 3 bits are required to signal the intra prediction mode. The encoder has to spend either 1 or 4 bits to represent the intra prediction mode.

The prediction mode used to predict the current block is chosen by the encoder with a given mode decision algorithm, RDO (Rate distortion optimization) based, for example. The RDO algorithm is well known in the domain of video compression.

Then, the prediction mode used to predict the current block is generally different from the MPM.

An object of the present embodiment is to find the MPM nearest possible to the coding mode actually used to predict the block.

The processes to encode and decode a block can be the followings.

At the encoder side, the encoder

1. determines the MPM according to the embodiment;

2. determines (with the RDO algorithm, for example, well known in the video compression community) the best coding mode for the block, by comparing the different blocks of predictions for the block to encode;

3. encodes the "coding mode" in reference to the MPM (for example, encoding the difference between the determined best coding mode and the MPM); and

4. encodes the block of residual error prediction between the current block to encode and the block of prediction (corresponding to the coding mode, see FIG. 2, for example).

At the decoder side, the decoder

1. determines the MPM according to the embodiment;

2. decodes the "coding mode" with the help of the MPM (for example, acquiring the "coding mode" to predict the block to decode by decoding the difference between the coding mode to acquire and the MPM); and

3. decodes the block of residual error prediction and adds the thus acquired block of residual error prediction to the block of prediction (acquired by applying the coding mode, see FIG. 2, for example) to acquire the block to decode.

(1) Principe

A process of determining MPM according to the present embodiment resides in an analysis of a virtual block of prediction of gradient located on a neighbor of a current block, this processing being realized for each directional mode of prediction.

Note that a block of prediction relates to the prediction concerning the pixel domain and corresponds to the prediction dedicated to the current block to encode. In contrast thereto, virtual block of gradient prediction is not used for the prediction but is only used to estimate an energy value of the gradients extrapolated inside the current block.

This analysis consists of detection and quantification (or summation) in terms of energy values of the directions which give highest gradient energy value.

The advantages of that approach are as follows:

In consideration of the impact of all reconstructed pixels contributing to the construction of the block of prediction, this impact is analyzed inside the block.

Working in the block of virtual prediction (of gradient) gives a good compromise of gradient energy value and contour density such as the gradient amplitude of the potential contours for each direction of prediction, and the spatial contribution of those contours inside the block i.e., the sizes of the contours.

The processing will be described below in detail.

According to the technology discussed in the above-mentioned reference, i.e., International Publication No. WO 2010/102935 A1, the mode of prediction 8×8 "diagonal down left" of index 3 is considered, where only the reconstructed pixels A to H are used and the others pixels (I to P) are not used.

According to the present embodiment, for each direction of prediction, a virtual block of prediction of the gradient is determined where the gradients are computed in the causal neighbor and the virtual block of gradient prediction is carried out using the same equations of extrapolation used in the processing of the block of prediction.

After that, for each virtual block of gradient prediction, an energy value is computed (for example, the sum of the absolute values of the gradients), and finally, the virtual block of gradient prediction giving the highest energy value is selected as the direction that corresponds to the MPM according to the present embodiment.

(2) Gradient processing

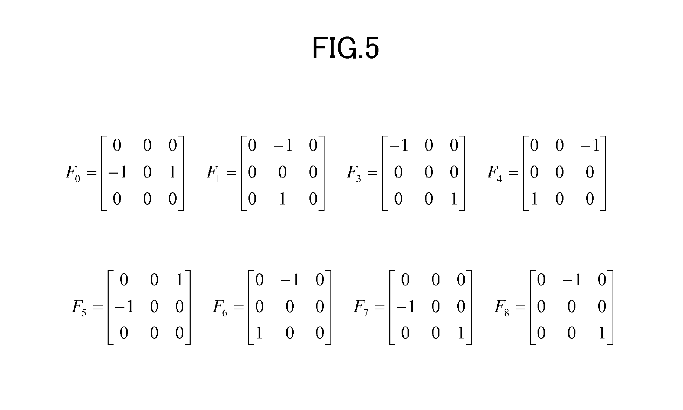

As mentioned before, the first step is to compute the gradient in the neighbor of the current block, for which a 2D window convolution (or filter) is applied on the pixels in the causal zone. Typically, for the current block (see FIGs. 2 and 3 in case of H.264), $F_d$, for the different spatial d (with d=0,1, ..., 8 and d≠2) directions are, for example, those shown in FIG. 5.

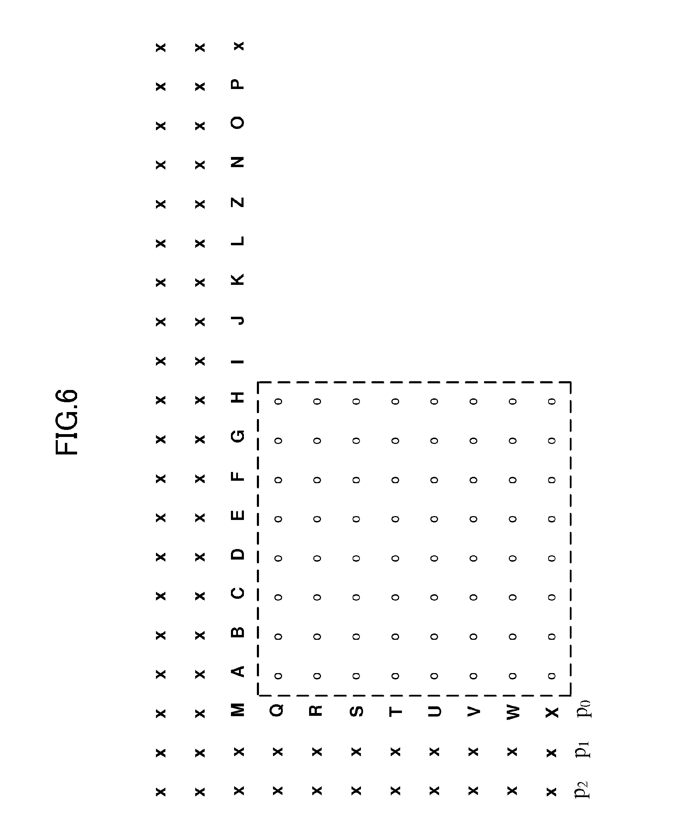

In this example, 8 convolution filters are used. The index "d" corresponds to the different orientations. The gradients are computed with the help of a filter having the size of (2N+1)×(2N+1) coefficients. The objective is to assign gradient values to the neighboring pixels X to P shown in FIG. 6.

In the case of the neighboring pixels of FIG. 6, the gradients $G_d(y, x)$ of the reconstructed pixels $I(x, y)$ are computed as follows:

$$G_d(y,x) = \sum_{i=-N}^{N}\sum_{J=-N}^{N} I(y+i, x+j) \cdot F_d(N+i, N+j) \qquad (5)$$

There, "y" and "x" denote the coordinates of line and column of the gradient $G_d(y,x)$.

Also, "y" and "x" denote the coordinates of line and column of the pixels $I(y,x)$.

"N+i" and "N+j" denote the coordinates of line and column of the coefficient of the filter $F_d$ having the size of $(2N+1)\times(2N+1)$.

Note that, in order to apply the filter on the last line, an N line padding (for example, a copy) is realized. This padding is illustrated by FIG. 6 where the pixels $p_0$, $p_1$ and $p_2$ are, for example, a simple copy of the respective pixels above, in this example of $3\times3$ of the $F_d$ size (N=1).

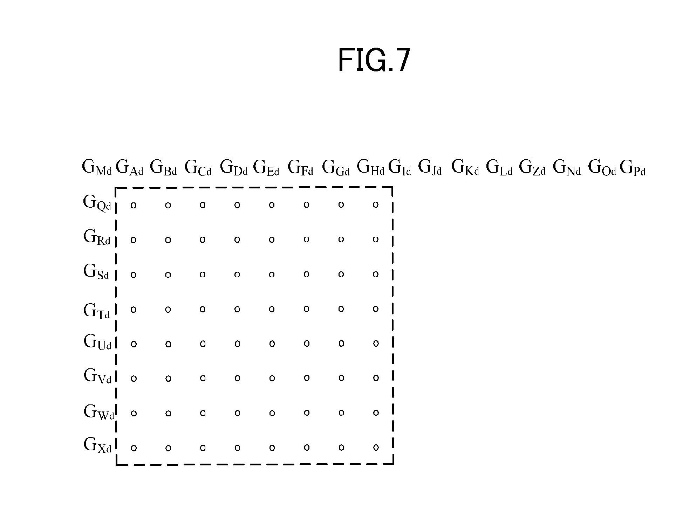

Thus, in the example of FIG. 7, the gradients are calculated as follows:

for the pixels from A to P,

$$G_d(y,x) = \sum_{i=-N}^{N}\sum_{j=-N}^{N} I(y+i-N, x+j) \cdot F_d(N+i, N+j) \qquad (6)$$

for the pixels from Q to X,

$$G_d(y,x) = \sum_{i=-N}^{N}\sum_{j=-N}^{N} I(y+i, x+j-N) \cdot F_d(N+i, N+j) \qquad (7)$$

for the pixel M,

$$G_d(y,x) = \sum_{i=-N}^{N}\sum_{j=-N}^{N} I(y+i-N, x+j-N) \cdot F_d(N+i, N+j) \qquad (8)$$

In the example of filters shown in FIG. 6, for the direction of prediction from 3 to 8 ($F_3$ to $F_8$), these formulas (6) to (8) are applied.

For the vertical and horizontal prediction, the filtering ($F_0$ and $F_1$ filters) can be optimized. These filters have respectively few columns and lines of zero coefficients. In this case, the gradients are calculated as follows:

for the pixels from A to P,

$$G_0(y,x) = \sum_{j=-N}^{N} I(y, x+j) \cdot F_0(i+N, N+j) \qquad (9)$$

for the pixels from Q to X,

$$G_1(y,x) = \sum_{i=-N}^{N} I(y+i,x) \cdot F_1(N+i,j+N) \quad (10)$$

Here, the pixel M is not used in the vertical and horizontal predictions (see modes 0 and 1 in FIGs. 2 and 3).

(3) Gradient extrapolation

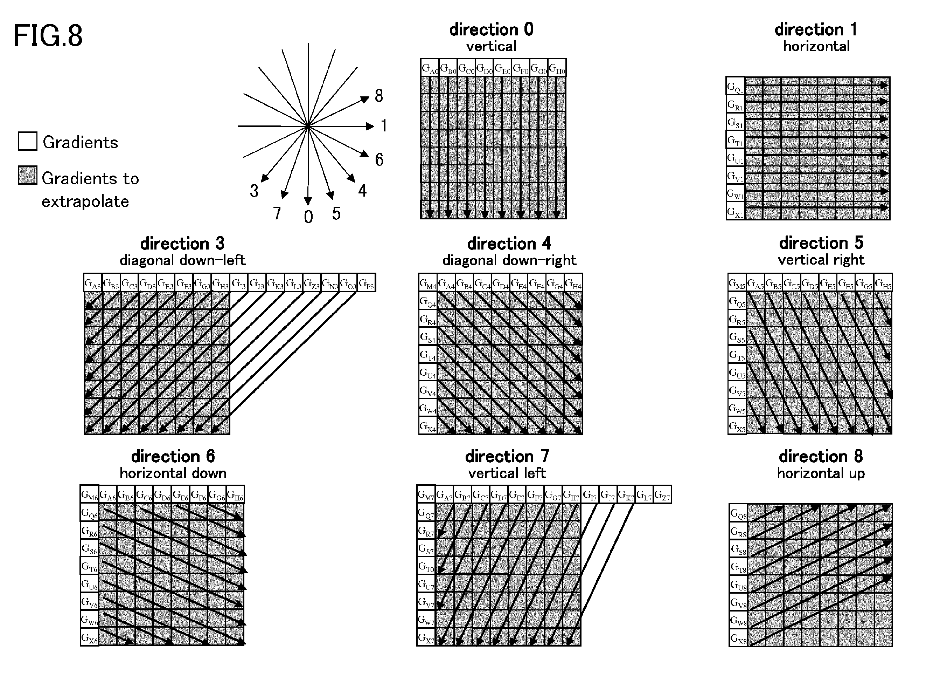

In the previous step, the gradient is computed on the boundaries as shown in FIG. 7, for each prediction direction d (with d=0, 1, ..., 7 and d≠2) with the help of respective $F_d$ filters.
Once the gradients are thus computed, the virtual block of gradient prediction (for each direction) will then be calculated using the "simple" spatial propagation by using the same technique of extrapolation used in the block of prediction (see FIGs. 2 and 3 in the pixel domain), as illustrated in FIG. 8.
These predictions are implemented as follows.
The gradient $Gr_d(i,j)$ is extrapolated, for the current block, of coordinates line and column (i,j). The first gradient of indexes (0,0) is the top-left one in the current block.
For example, in the mode 1 (horizontal), the gradients $Gr_1(0,0)$, $Gr_1(0,1)$, ..., $Gr_1(0,7)$ are predicted with the gradient $G_{Q1}$.
In the mode 5, for example, $Gr_5(0,0)$ is extrapolated by $(G_{A5} + G_{Q5} +1)/2$, and also, $Gr_5(1,2)$ and $Gr_5(3,3)$ are predicted by $(G_{A5} + 2G_{B5} + G_{C5} +2)/4$.
Another possibility of the extrapolation resides in the propagation of the absolute value of the gradients.
In this case, in the mode 1 (horizontal), the gradients $Gr_1(0,0)$, $Gr_1(0,1)$, ..., $Gr_1(0,7)$ are predicted with the gradient $|G_{Q1}|$, where the symbol $||$ is the operator for the absolute value.
In the mode 5, $Gr_5(0,0)$ is extrapolated by $(|G_{A5}| + |G_{Q5}| +1)/2$, and also, $Gr_5(1,2)$ and $Gr_5(3,3)$ are predicted by $(|G_{A5}| + 2|G_{B5}| + |G_{C5}| +2)/4$.

(4) Block of gradient energy

The energy value of the extrapolated gradients in the (virtual prediction) block is acquired by the sum of the gradients contained inside the virtual gradient prediction block. For the block of gradients $Gr_d$ (size of H×W) for a given d orientation, the energy value $E_d$ of this block is computed as follows:

the sum of the gradients is calculated as follows,

$$E_d = \sum_{i=0}^{H-1} \sum_{j=0}^{W-1} |Gr_d(i,j)| \quad (12)$$

or, the sum of the gradients is calculated, if greater than a given threshold (fixed thresholding), as follows,

$$E_d = \sum_{i=0}^{H-1} \sum_{j=0}^{W-1} |Gr_d(i,j)| \; if \; |Gr_d(i,j)| > thr \quad (13)$$

for example, thr = 10,
or, with a threshold function using the quantizer step value (QP), as follows,

$$E_d = \sum_{i=0}^{H-1} \sum_{J=0}^{W-1} |Gr_d(i,j)| \quad if \quad |Gr_d(i,j)| > f(QP) \quad (14)$$

for example, $f(QP) = \sqrt{QP}$ if QP $>$ 0,

(Note: the quantizer step value (QP) corresponds, for example, to the well-known quantizer step used in H.264 and HEVC applied to a residual error (of prediction) transformed (for example, DCT) coefficient.)
or, the maximum gradient is used, as follows,

$$E_d = \arg \max_{i,j} |Gr_d(i,j)| \quad (15)$$

For the current block B, the best direction having the maximum energy value $E_B$ from among the directions of prediction available in the causal neighboring is acquired by:

$$E_B = \arg \max_d E_d \qquad (16)$$

In the example of the 8 directional modes of H.264 (see FIGs. 2 and 3)

$$E_B = \arg \max_d E_d \quad \text{with d} = 0, \dots, 8 \text{ and}, d \neq 2 \qquad (17)$$

(5) MPM criterion selection

The formula (17) gives the most probable direction (of $E_B$ energy value) of a potential contour crossing the current block. In addition, in the context of spatial mode prediction used in the video coding standards, the non-directional prediction modes such as the DC mode for the H264 standard and the DC and planar modes for the HEVC standard are taken into account. (5.1) H264

An additional virtual gradient (because of the DC mode) is estimated for the DC mode of index number 2, as follows:

$$E_2 = 1 + \lambda/8 \sum_{d=0}^{d=8, d \neq 2} E_d \quad (18)$$

There, $\lambda$ denotes a predetermined coefficient such as to assign, to the DC mode, an estimated value. This value is then selected (from the other d directions) when the signal around the current block is nearly flat. For example, $\lambda$ can be equal to 1.2.

In that case, the formula (17) is now:

$$E_{d_{Emax}} = \arg \max_d E_d \quad \text{with d} = 0, \dots, 8 \qquad (19)$$

The MPM then corresponds to the mode of index $d_{E_{max}}$ that gives the maximum energy value.

(5.2) HEVC

In the HEVC standard, the 35 modes including the non-directional modes, i.e., the DC and planar modes are taken into account. In this situation, either of the following two solutions can be applied.

Similarly to the case of H.264 standard described above, the energy values $E_{DC}$ and $E_{planar}$ dedicated to the DC and planar modes, respectively, are estimated, as follows:

$$E_{DC} = E_{planar} = 1 + \lambda/33 \sum_{d=2}^{d=34} E_d \quad (20)$$

The first solution will now be described.

First, in the same way, the energy value is calculated from all the directional and non-directional modes, as follows:

$$E_{d_{Emax}} = \arg\max_{d} (E_d) \quad \text{with d} = 0,1,\dots 34$$

Then, if $d_{E_{max}}$ equals to any one of the directional modes d (indexes 2 to 34), then,

$$\text{MPM} = d_{E_{max}}$$

If $d_{E_{max}}$ is other than one of the directional modes d (indexes 2 to 34), that is, if the MPM equals to either of the non-directional modes (indexes 0 and 1, i.e., the DC and planar modes), then the rule used in the HEVC standard is applied to determine the MPM.

The second solution will now be described.

First, in the same way, the energy value is calculated from all the directional and non-directional modes, as follows:

$$E_{d_{Emax}} = \arg\max_{d} (E_d) \quad \text{with d} = 0,1,\dots,34$$

Then, if $d_{E_{max}}$ equals to any one of the directional modes d (indexes 2 to 34), then MPM = $d_{E_{max}}$

If $d_{E_{max}}$ is other than one of the directional modes d (indexes 2 to 34), that is, if the MPM equals to either of the non-directional modes (indexes 0 and 1, i.e., the DC and planar modes), then, based on the neighboring reconstructed pixels, either of the DC and planar modes is selected.

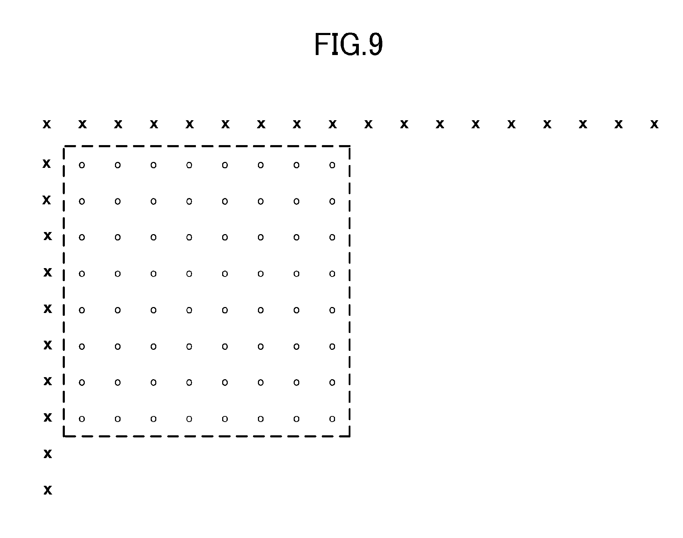

The context of prediction of the current block shown in FIG. 9 is considered.

Two estimation errors on the reconstructed neighboring pixels ("x" in FIG. 9), i.e., $Er_{DC}$ for the DC mode and $Er_{planar}$ for the planar mode are be computed.

Below, i, j denote the coordinates on line and column of the pixels of the block (to predict of size of H×W). The first pixel of indexes (0,0) is the top-left one in the current block, and a value associated with the mode DC is calculated, as follows:

$$DC = \left( \sum_{j=0}^{W-1} I(-1,j) + \sum_{i=-1}^{H-1} I(i,-1) \right) / (H + W + 1)$$

The estimation error $Er_{DC}$ on the neighboring pixels (x) from the DC mode is calculated as follows:

$$Er_{DC} = \left( \sum_{j=0}^{W-1} |I(-1,j) - DC| + \sum_{i=-1}^{H-1} |I(i,-1) - DC| \right) / (H + W + 1)$$

As for the planar mode, the respective slopes in line and column of the neighboring pixels are calculated, and after that, the error $Er_{planar}$ on the neighboring pixels (x) is estimated, as follows:

The slopes $\alpha_v$ and $\alpha_h$ denoting variations respectively estimated on left column (vertical) and top line (horizontal) are calculated as follows:

$$\alpha_v = \big( I(H,-1) - I(-1,-1) \big) / (H+1) \qquad \text{if } I(H,-1)$$

is available

$$\alpha_h = \big( I(-1,W) - I(-1,-1) \big) / (W+1)$$

Then, the estimation error $Er_{planar}$ is calculated as follows:

$$Er_{planar} = \left( \sum_{j=0}^{W-1} |I(-1,j) - (I(-1,-1) + (j+1) \times \alpha_h)| \right.$$

$$\left. + \sum_{i=0}^{H-1} |I(i,-1) - (I(-1,-1) + (i+1) \times \alpha_v)| \right) / (W + H)$$

On the other hand, if $I(H, -1)$ is not available, the pixel $I(H - 1, -1)$ is used, as follows:

$$\alpha_v = \big( I(H-1,-1) - I(-1,-1) \big) / (H) \text{ with } I(H,-1)$$

not available

$$\alpha_h = \big(I(-1,W) - I(-1,-1)\big)/(W+1)$$

Then, the estimation error $Er_{planar}$ is calculated as follows:

$$Er_{planar} = \left( \sum_{j=0}^{W-1} |I(-1,j) - (I(-1,-1) + (j+1) \times \alpha_h)| \right.$$

$$\left. + \sum_{i=0}^{H-2} |I(i,-1) - (I(-1,-1) + (i+1) \times \alpha_v)| \right) / (W + H - 1)$$

If $I(H, -1)$ and I $(-1, W)$ are not available, then,

$$\alpha_v = \big(I(H-1,-1) - I(-1,-1)\big)/(H)$$

$$\alpha_h = \big(I(-1,W-1) - I(-1,-1)\big)/(W)$$

$$Er_{planar} = \left( \sum_{j=0}^{M-2} |I(-1,j) - (I(-1,-1) + (j+1) \times \alpha_h)| \right.$$

$$\left. + \sum_{i=0}^{H-2} |I(i,-1) - (I(-1,-1) + (i+1) \times \alpha_v)| \right) / (W - 1 + H - 1)$$

Then, the MPM corresponds to the minimum of estimation error from $Er_{DC}$ and $Er_{planar}$, as follows:

$$\text{If } Er_{DC} \leq Er_{planar}, \text{then,}$$

$$MPM = DC \text{ Mode}$$

$$\text{If } Er_{DC} > Er_{planar}, \text{then,}$$

$$MPM = Planar \text{ Mode}$$

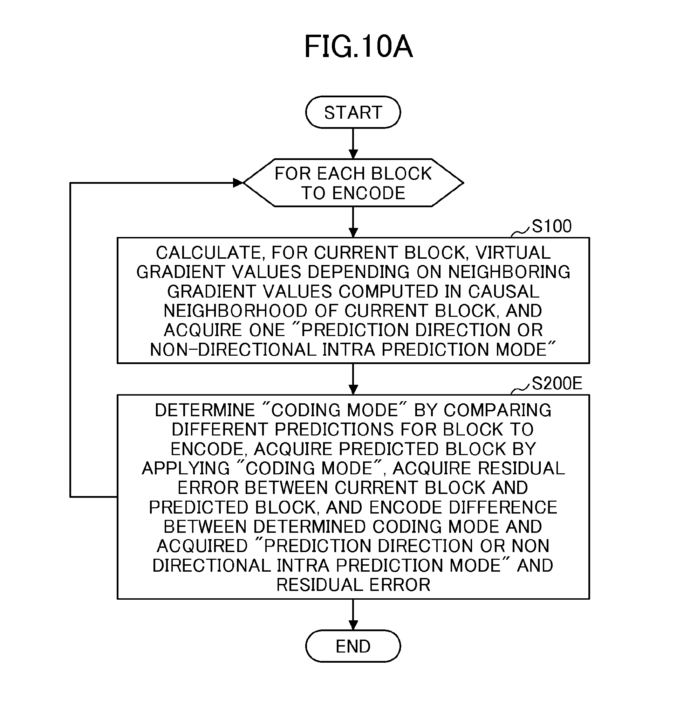

Next, using FIGs. 10A-14, a flow of processes in the present embodiment will be described.

As shown in FIG. 10A, for each of blocks of a video image to be encoded, the process of FIG. 10A is carried out so that the video image can be consequently encoded.

In Step S100, virtual gradient values depending on neighboring gradient values in a causal neighborhood of the block are calculated. Then, one prediction direction or non-directional intra prediction mode is acquired (selected).

The "neighboring gradient values" are acquired in the above-mentioned item "(2) Gradient processing" as $G_d(y,x)$ for the neighboring pixels X to P shown in FIG. 6.

The "virtual gradient values" $Gr_d$ are acquired from "(3) Gradient extrapolation", and then, "one prediction direction or non-directional intra prediction mode" (MPM) is acquired from "(4) Block of gradient energy" and "(5) MPM criterion selection".

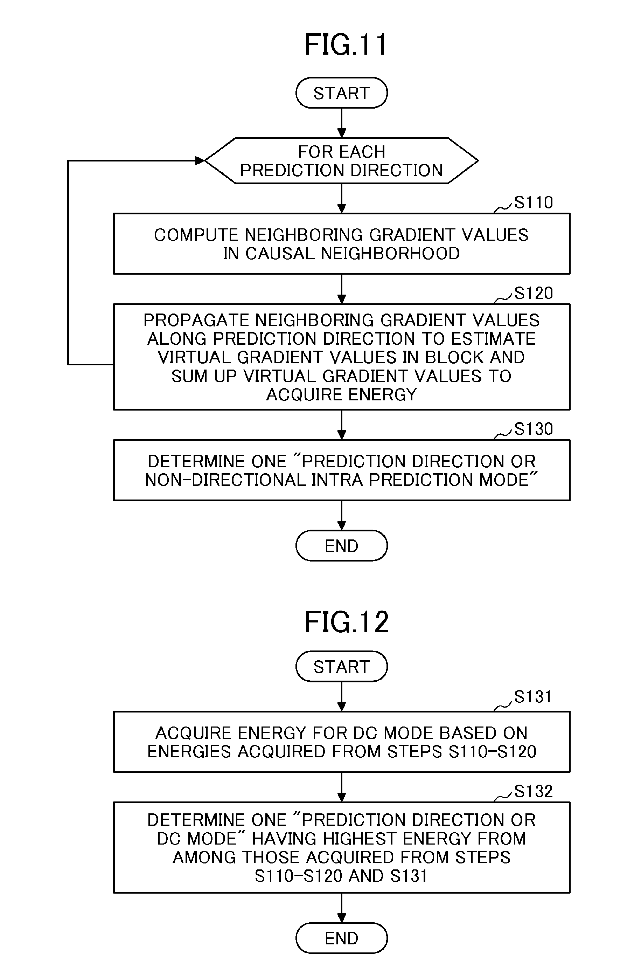

Details will be described later using FIGs. 11-14.

In Step S200E, a "coding mode" is determined by comparing different predictions for the block to encode , the "difference" between the determined "coding mode" and the acquired "prediction direction or non-directional intra prediction mode" (MPM) is acquired, and the predicted block is acquired by applying the "coding mode". Then, a residual error between the current block to encode and the predicted block is acquired, and the acquired residual error and the "difference" are encoded to be sent out.

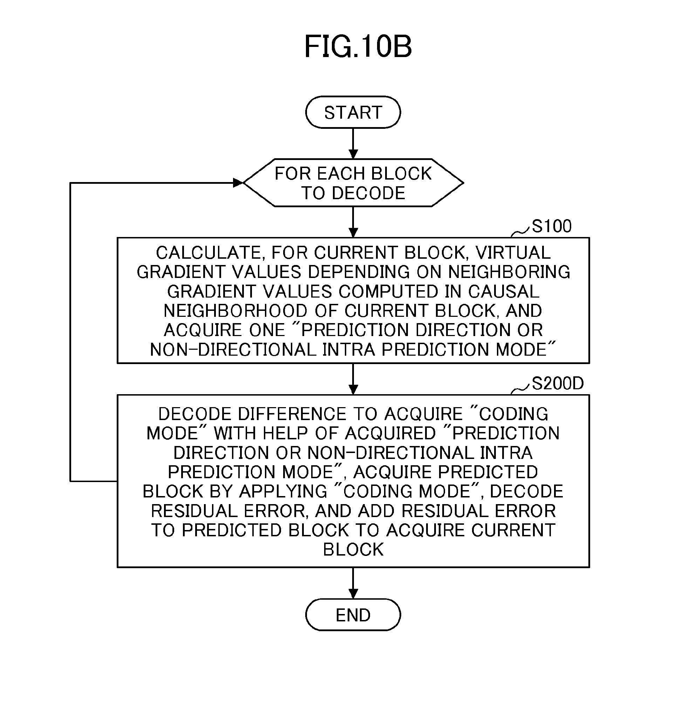

As shown in FIG. 10B, for each of blocks of a video image to be decoded, the process of FIG. 10B is carried out so that the video image can be consequently decoded.

In Step S100 of FIG. 10B, virtual gradient values depending on neighboring gradient values in a causal neighborhood of the block are calculated. Then, one prediction direction or non-directional intra prediction mode is acquired (selected).

The "neighboring gradient values" are acquired in the above-mentioned item "(2) Gradient processing" as $G_d(y,x)$ for the neighboring pixels X to P shown in FIG. 6.

The "virtual gradient values" $Gr_d$ are acquired from "(3) Gradient extrapolation", and then, "one prediction direction or non-directional intra prediction mode" (MPM) is acquired from "(4) Block of gradient energy" and "(5) MPM criterion selection".

Details will be described later using FIGs. 11-14.

In Step S200D of FIG. 10B, the "difference" sent out from the encoder side is decoded to acquire the "coding mode" with the help of the acquired "prediction direction or non-directional intra prediction mode" (MPM). For example, the "coding mode" is acquired by applying the decoded "difference" to the MPM. Then, the predicted block is acquired by applying the thus acquired "coding mode". Then, the residual error sent out from the encoder side is decoded, and the decoded residual error is added to the acquired predicted block to acquire the current decoded block.

FIG. 11 illustrates one example of details of Step S100 shown in FIG. 10.

In Step S110, for each prediction direction "d", the neighboring gradient values ("$G_d(y,x)$") in the causal neighborhood are computed. As mentioned above, for example, in a case of applying a manner in the H.264 standard, the prediction directions "d" include d = 0, 1, ..., 8 and d ≠ 2 (see FIGs. 2 and 3).

In Step S120, the neighboring gradient values computed in Step S110 are propagated along the current prediction direction to estimate the virtual gradient values "$Gr_d$" in the current block ("(3) Gradient extrapolation"). Then, the thus estimated virtual gradient values in the current block are summed up to acquire an energy value *"Ed"* ("(4) Block gradient energy").

In Step S130, the one prediction direction or non-directional intra prediction mode is determined based on the energy values acquired for the respective prediction directions from the repetitious loop process of Steps S110-S120.

More specifically, in a case of applying a manner in the H.264 standard, as shown in FIG. 12, an energy value "$E_2$" for the DC mode is acquired based on the energy values acquired for the respective prediction directions from the repetitious loop process of Steps S110-S120, in Step S131, as shown in the formula (18).

In Step S132 of FIG. 12, the one prediction direction or non-directional intra prediction mode having the highest energy value (MPM) is determined, as shown in the formula (19).

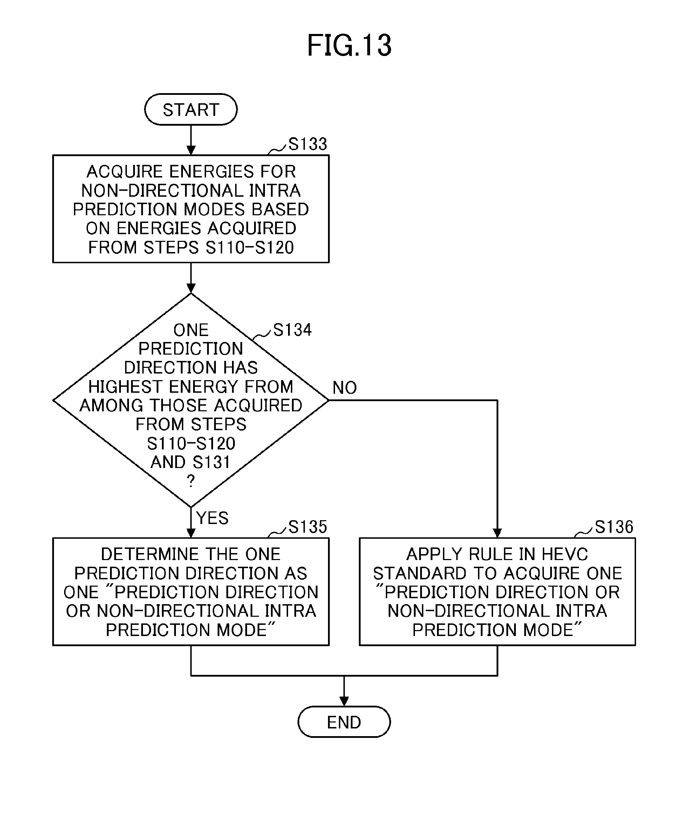

On the other hand, in the above-mentioned first solution in a case of applying a manner in the HEVC standard, as shown in FIG. 13, respective energy values "$E_{DC}$" and "$E_{planar}$" for the DC and planar modes are acquired based on the energy values acquired for the respective prediction directions from the repetitious loop process of Steps S110-S120, in Step S133, as shown in the formula (20).

In Step S134, it is determined whether any one of the prediction directions has the highest energy value (i.e., "$d_{E_{max}}$ = d (2 to 34)").

If any one of the prediction directions has the highest energy value (i.e., "$d_{E_{max}}$= d (2 to 34)"), the corresponding prediction direction is determined as the one prediction direction or non-directional intra prediction mode (MPM) (Step S135).

If either of the non-directional intra prediction modes (DC mode and planar mode) has the highest energy value (i.e., "$d_{E_{max}} \neq$ d (2 to 34)"), the one prediction direction or non-directional intra prediction mode (MPM) is determined according to the rule of the HEVC standard in the related art (Step S136).

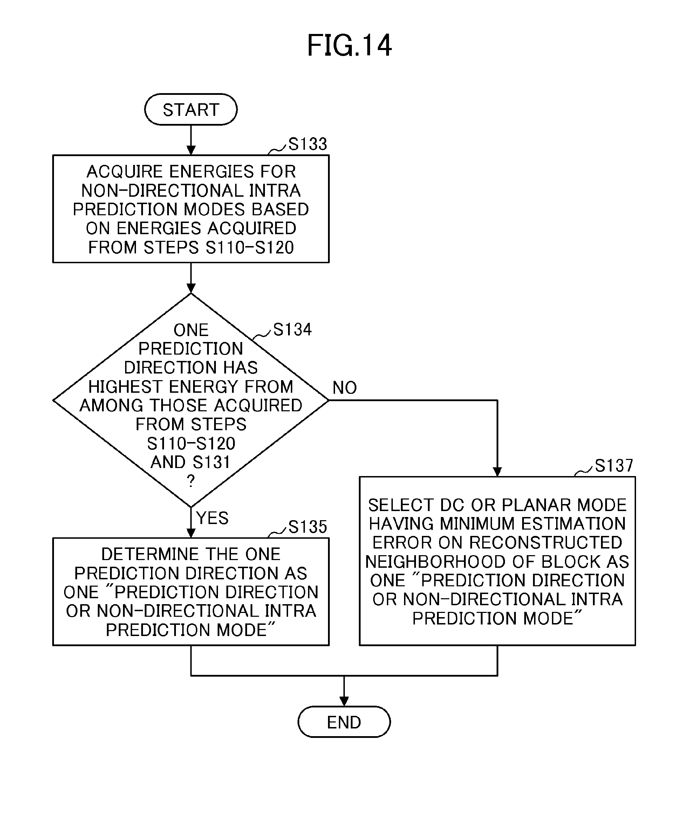

On the other hand, in the above-mentioned second solution in a case of applying a manner in the HEVC standard, as shown in FIG. 14, Steps S133-S135 are the same as those of FIG. 13.

If either of the non-directional intra prediction modes (DC mode and planar mode) has the highest energy value (i.e., "$d_{E_{max}} \neq$ d (2 to 34)"), either the DC mode or the planar mode having the minimum estimation error ("$Er_{DC}$" or "$Er_{planar}$") on the reconstructed neighboring pixels ("x" in FIG. 9) is determined as the one prediction direction or non-directional intra prediction mode (MPM) (Step S137).

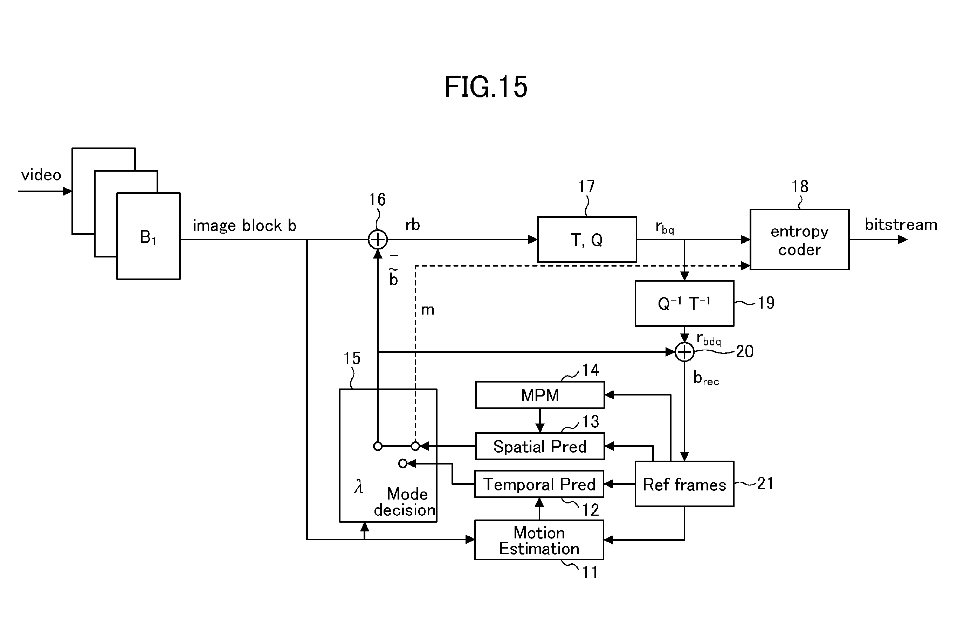

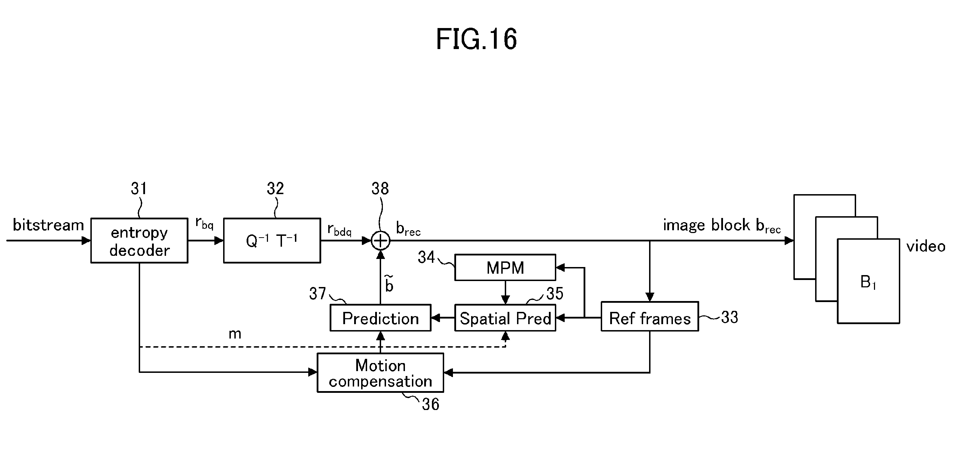

Next, using FIGs. 15 and 16, an encoder and a decoder in an example of the embodiment will be described.

FIGs. 15 and 16 show an encoder and a decoder, respectively, where Most Probable Mode (MPM) determination is focused at (i.e., "MPM" boxes 14 and 34). Note that, the same boxes (i.e., the "MPM" boxes 14 and 34; "$Q^{-1} T^{-1}$" boxes 17 and 32; "Reference frames" boxes 21 and 33; and "Spatial Pred" boxes 13 and 35, included in the encoder and the decoder have the same functions, respectively.

At the encoder and the decoder sides, only the intra image prediction mode, using the intra mode (m), is described. However, it is well known that the function of a "Mode decision" box 15 (using a given RDO criterion) resides on the determination of the best prediction mode from the intra and inter image predictions modes.

As shown in FIG. 15, the encoder includes a "Motion Estimation" box 11, a "Temporal Pred" box 12, the "Spatial Pred" box 13, the "MPM" box 14, the "Mode decision" box 15, an adder ("+") box 16, a "T, Q" box 17, an "entropy coder" box 18, the "$Q^{-1} T^{-1}$" box 19, an adder ("+") box 20 and the "Ref frames" box 21.

When an original image block b is to be encoded, the following process is carried out in the encoder of FIG. 15.

1) With the original block b and the (previous decoded) images stored in the "Ref frames" box 21 functioning as a buffer storing reference frames, the "Motion Estimation" box 11 finds the best inter image prediction block (with the "Temporal Pred" box 12) with a given motion vector. From the available intra prediction modes (see FIG. 2, for example, in case of H264) and neighboring reconstructed (or decoded) pixels, the "Spatial Pred" box 13 gives the intra prediction block.

2) The MPM is determined by the "MPM" box 14 which depends on the directional gradient values computed in causal (or decoded) neighborhood of the block from the previous block(s) of the current image according to the embodiment described above.

3) If the "Mode decision" box 15 chooses (based on, for example, Rate Distortion Optimization criterion, i.e., RDO, described later) an intra image prediction mode (of "m" index, from D intra available modes), the residual error prediction rb is acquired by the adder 16 as the difference between the original block b and the prediction block $\tilde{b}$.
In reference to the determined MPM, the spatial (intra) coding mode m is encoded. For example, the difference between the MPM and the chosen spatial (intra) coding mode m is acquired and is sent out to the decoder after being encoded by the "entropy encoder" box 18.

4) After that, the residual error prediction rb is transformed and quantized ($r_{bq}$) by the "T, Q" box 17, and finally, is entropy coded by the "entropy coder" box 18 and sent out in the bitstream.

5) The decoded block $b_{rec}$ is locally rebuilt, by adding the inverse transformed and dequantized (by the "$T^{-1} Q^{-1}$" box 19) prediction error block $r_{bdq}$ to the prediction block $\tilde{b}$ by the adder 20. Thus, the reconstructed block $b_{rec}$ is acquired.

6) The thus acquired reconstructed (or decoded) frame is stored in the "Ref frames" box 21.

The above-mentioned "Rate Distortion Optimization" (RDO) will now be described.

An RDO criterion can be used to select the best coding mode, which has the minimum rate-distortion cost. This method can be expressed by the following formula.

$$Rd_m = \arg\min_k \left( SSD_k + \lambda \times Cst_k \right) \quad \text{with k} = 0, D - 1$$

and

$$SSD_k = \sum_{i=0}^{U} \sum_{j=0}^{V} \left( b(i,j) - b_{rec}^k(i,j) \right)^2$$

with
"V" and "U" denote the vertical and horizontal dimensions of the blocks and
"i" and "j" denote the vertical and horizontal coordinates of the pixels in the blocks,

where λ is the (well known) Lagrangian multiplier, $SSD_k$ is the distortion of the reconstructed block $b_{rec}^k$ via an intra prediction of k index mode, which is calculated by sum of squared differences between the original samples in the current block b and the reconstructed (or decoded) block $b_{rec}^k$. The term $Cst_k$ is the cost of bit-rate after variable-length coding.

Finally, the best coding mode of m index corresponds to the minimum of rate distortion *Rd* from D possible modes, for instance, in case of intra prediction H.264, the total number of which can be equal to 9 (see FIG. 2).

In this regard, see Thomas Wiegand, Bernd Girod, "Lagrange Multiplier Selection in Hybrid Video Coder Control", Image processing IEEE 2001.

As shown in FIG. 16, the decoder includes an "entropy decoder" box 31, the "Q⁻¹ T ¹" box 32, an adder ("+") 38, the "Ref frames" box 33, the "MPM" box 34, the "Spatial Pred" box 35, a "Motion compensation" box 36, a "Prediction" box 37 and an adder ("+") 38.

The following process is carried out in the decoder of FIG. 16.

1) From the bitstream sent out from the encoder, for a given block, the "entropy decoder" box 31 decodes the quantized error prediction $r_{bq}$.
2) The thus acquired residual error prediction $r_{bq}$ is dequantized and inverse transformed by the "T-1 Q-1" box 32 into the dequantized and inverse transformed residual error prediction $r_{bdq}$.
3) The MPM is determined by the "MPM" box 34 which depends on the directional gradient values computed in causal (or decoded) neighborhood of the block from the previous block(s) of the current image according to the embodiment described above.
4) With the help of the determined MPM, the spatial (intra) coding mode m is decoded. For example, the difference between the MPM and the spatial (intra) coding mode "m" is decoded to acquire the "coding mode" to predict the block to decode.
5) By applying the thus acquired "m" intra mode, the "Spatial Pred" box 35 and the "Prediction" box 37 acquire the block of intra image prediction b with the decoded neighboring pixels.
6) The decoded block $b_{rec}$ is locally rebuilt, by adding the decoded and dequantized prediction error block $r_{bdq}$ to the prediction block $\tilde{b}$ by the adder 38. Thus, the reconstructed block $b_{rec}$ is acquired.
7) The thus acquired reconstructed (or decoded) frame is stored in the "Ref frames" box 33. The decoded frames will be used for the next inter/intra image prediction.

The present embodiment consists in computing the MPM based on the surrounding causal pixels using directional gradient filters and by analyzing the impact on the current block (virtual gradient prediction block) of the potential contour for each direction of prediction. Through this approach, it is possible to be particularly close to the contents of the reconstructed signal around the current block in comparison to the related arts described above. When the present embodiment is implemented in an encoder, the advantage resides in the reduction of the bit-rate for a given quality or the improvement of the quality for a given bit-rate.

The present embodiment can be applied to image and video compression. In particular, concepts residing in the present embodiment may be submitted to the ITU-T or MPEG standardization groups as part of the development of a new generation encoder dedicated to archiving and distribution of video content.

Thus, the method of encoding a video image, the method of decoding the encoded video image and the encoder have been described in the specific embodiment. However, the present invention is not limited to the embodiment, and variations and replacements can be made within the scope of the claimed invention.

**Claims**

1. A method of encoding a video image comprising the steps of:

for each one of blocks of the video image,
calculating virtual gradient values in the block depending on neighboring gradient values computed in a causal neighborhood of the block and acquiring one prediction direction or non-directional intra prediction mode based on the virtual gradient values (S100); and
determining a coding mode by comparing different predictions for the block, acquiring a predicted block by applying the determined "coding mode", acquiring a residual error between the predicted block and the current block and encoding a difference between the determined coding mode and the prediction direction or non-directional intra prediction mode (S200E), wherein
the step of calculating includes, for each prediction direction, propagating the neighboring gradient values along the prediction direction to estimate the virtual gradient values in the block (S120).

2. A method of decoding an encoded video image comprising the steps of:

for each one of blocks of the encoded video image to be decoded, calculating virtual gradient values in the block depending on neighboring gradient values computed in a causal neighborhood of the block and acquiring one prediction direction or non-directional intra prediction mode based on the virtual gradient values (S100),
decoding a difference between a coding mode to predict the block and the acquired prediction direction or non-directional intra prediction mode, acquiring the coding mode by applying the decoded difference to the prediction direction or non-directional intra prediction mode, acquiring the predicted block by applying the acquired coding mode, decoding a residual error and acquiring the block by adding the decoded residual error to the predicted block (S200D), wherein
the calculating includes, for each prediction direction, propagating the neighboring gradient values along the prediction direction to estimate the virtual gradient values in the block (S120).

3. The method as claimed in claim 1 or 2, wherein
the step of calculating further includes,
summing up the estimated virtual gradient values in the block to acquire an energy value for each prediction direction (S120),
acquiring an energy value for at least one non-directional intra prediction mode (S131), and
determining the one prediction direction or non-directional intra prediction mode based on the energy values acquired for the respective prediction directions and the at least one non-directional intra prediction mode (S132).

4. The method as claimed in claim 3, wherein
the step of determining includes
determining, as the one prediction direction or non-directional intra prediction mode, the prediction direction or non-directional intra prediction mode having the highest energy value among those acquired for the respective prediction directions and the at least one non-directional intra prediction mode (S132).

5. The method as claimed in claim 3, wherein
the step of determining includes
determining the prediction direction having the highest energy value as the one prediction direction or non-directional intra prediction mode if the prediction direction has the highest energy value among those acquired for the respective prediction directions and the at least one non-directional intra prediction mode (S 135), and
determining the one prediction direction or non-directional intra prediction mode according to a manner of the HEVC standard if any one of the at least one non-directional intra prediction mode has the highest energy value among those acquired for the respective prediction directions and the at least one non-directional intra prediction mode (S 136).

6. The method as claimed in claim 3, wherein
the step of determining includes

determining the prediction direction having the highest energy value as the one prediction direction or non-directional intra prediction mode if the prediction direction has the highest energy value among those acquired for the respective prediction directions and the at least one non-directional intra prediction mode (S 135), and
determining as the one prediction direction or non-directional intra prediction mode the non-directional intra prediction mode having a minimum estimation error on a reconstructed neighborhood of the block among those of the at least one non-directional intra prediction mode if any one of the at least one non-directional intra prediction mode has the highest energy value among those acquired for the respective prediction directions and the at least one non-directional intra prediction mode (S 137).

7. Apparatus for encoding a video image, the apparatus comprising:

a calculating circuit (14, 21) calculating, for each one of blocks of a video image, virtual gradient values in the block depending on neighboring gradient values computed in a causal neighborhood of the block and acquiring one prediction direction or non-directional intra prediction mode based on the virtual gradient values; and
an encoding circuit (11, 12, 13, 15, 16, 18, 21) determining a coding mode by comparing different predictions for the block, acquiring a predicted block by applying the determined "coding mode", acquiring a residual error between the predicted block and the current block and encoding a difference between the coding mode and the prediction direction or non-directional intra prediction mode, wherein
the calculating circuit (14, 21) propagates, for each prediction direction, the neighboring gradient values along the prediction direction to estimate the virtual gradient values in the block.

8. Apparatus for decoding an encoded video image comprising:

a calculating circuit (33, 34) calculating, for each one of blocks of the encoded video image, virtual gradient values in the block depending on neighboring gradient values computed in a causal neighborhood of the block and acquiring one prediction direction or non-directional intra prediction mode based on the virtual gradient values; and
a decoding circuit (31, 33, 35, 37, 38) decoding a difference between a coding mode to predict a current block and the acquired prediction direction or non-directional intra prediction mode, acquiring the coding mode by applying the decoded difference to the prediction direction or non-directional intra prediction mode, acquiring the predicted block by applying the acquired coding mode, decoding a residual error and acquiring the block by adding the decoded residual error to the predicted block, wherein
the calculating circuit (33, 34) propagates, for each prediction direction, the neighboring gradient values along the prediction direction to estimate the virtual gradient values in the block.

9. The apparatus as claimed in claim 7 or 8, wherein
the calculating circuit (14, 21) sums up the estimated virtual gradient values in the block to acquire an energy value for each prediction direction,
acquires an energy value for at least one non-directional intra prediction mode, and
determines the one prediction direction or non-directional intra prediction mode based on the energy values acquired for the respective prediction directions and the at least one non-directional intra prediction mode.

10. The apparatus as claimed in claim 9, wherein
the calculating circuit (14, 21) determines, as the one prediction direction or non-directional intra prediction mode, the prediction direction or non-directional intra prediction mode having the highest energy value among those acquired for the respective prediction directions and the at least one non-directional intra prediction mode.

11. The apparatus as claimed in claim 9, wherein
the calculating circuit (14, 21) determines the prediction direction having the highest energy value as the one prediction direction or non-directional intra prediction mode if the prediction direction has the highest energy value among those acquired for the respective prediction directions and the at least one non-directional intra prediction mode, and
determines the one prediction direction or non-directional intra prediction mode according to a manner of the HEVC standard if any one of the at least one non-directional intra prediction mode has the highest energy value among those acquired for the respective prediction directions and the at least one non-directional intra prediction mode.

12. The apparatus as claimed in claim 9, wherein
the calculating circuit (14, 21) determines the prediction direction having the highest energy value as the one prediction direction or non-directional intra prediction mode if the prediction direction has the highest energy value among those acquired for the respective prediction directions and the at least one non-directional intra prediction mode, and

determines, as the one prediction direction or non-directional intra prediction mode, the non-directional intra prediction mode having a minimum estimation error on a reconstructed neighborhood of the block among those of the at least one non-directional intra prediction mode if any one of the at least one non-directional intra prediction mode has the highest energy value among those acquired for the respective prediction directions and the at least one non-directional intra prediction mode.

13. Computer program product downloadable from a communication network and/or recorded on a medium readable by computer and/or executable by a processor, comprising program code instructions for implementing a method according to at least one of claims 1 to 6.

14. Non-transitory computer-readable medium comprising a computer program product recorded thereon and capable of being run by a processor, including program code instructions for implementing a method according to at least one of claims 1 to 6.

# FIG.1

# FIG.2

EP 3 032 830 A1

**Mode 0**

vertical

**Mode 1**

horizontal

**Mode 2**

DC

**Mode 3**

diagonal down-left

**Mode 4**

diagonal down-right

**Mode 5**

vertical right

**Mode 6**

horizontal down

**Mode 7**

vertical left

**Mode 8**

Horizontal up

FIG.3

FIG.4

0: Planar
1: DC

Example: Directional mode 29

Boundary samples from decoded PUs

Current PU

# FIG.5

$$F_0 = \begin{bmatrix} 0 & 0 & 0 \\ -1 & 0 & 1 \\ 0 & 0 & 0 \end{bmatrix} \quad F_1 = \begin{bmatrix} 0 & -1 & 0 \\ 0 & 0 & 0 \\ 0 & 1 & 0 \end{bmatrix} \quad F_3 = \begin{bmatrix} -1 & 0 & 0 \\ 0 & 0 & 0 \\ 0 & 0 & 1 \end{bmatrix} \quad F_4 = \begin{bmatrix} 0 & 0 & -1 \\ 0 & 0 & 0 \\ 1 & 0 & 0 \end{bmatrix}$$

$$F_5 = \begin{bmatrix} 0 & 0 & 1 \\ -1 & 0 & 0 \\ 0 & 0 & 0 \end{bmatrix} \quad F_6 = \begin{bmatrix} 0 & -1 & 0 \\ 0 & 0 & 0 \\ 1 & 0 & 0 \end{bmatrix} \quad F_7 = \begin{bmatrix} 0 & 0 & 0 \\ -1 & 0 & 0 \\ 0 & 0 & 1 \end{bmatrix} \quad F_8 = \begin{bmatrix} 0 & -1 & 0 \\ 0 & 0 & 0 \\ 0 & 0 & 1 \end{bmatrix}$$

# FIG.6

```
x  x  x  x  x  x  x  x  x  x  x  x  x  x  x  x  x  x  x  x

x  x  x  x  x  x  x  x  x  x  x  x  x  x  x  x  x  x  x  x

x  x  M  A  B  C  D  E  F  G  H  I  J  K  L  Z  N  O  P  x

x  x  Q  o  o  o  o  o  o  o  o

x  x  R  o  o  o  o  o  o  o  o

x  x  S  o  o  o  o  o  o  o  o

x  x  T  o  o  o  o  o  o  o  o

x  x  U  o  o  o  o  o  o  o  o

x  x  V  o  o  o  o  o  o  o  o

x  x  W  o  o  o  o  o  o  o  o

x  x  X  o  o  o  o  o  o  o  o
```

$p_2$  $p_1$  $p_0$

# FIG.7

$G_{Md}$ $G_{Ad}$ $G_{Bd}$ $G_{Cd}$ $G_{Dd}$ $G_{Ed}$ $G_{Fd}$ $G_{Gd}$ $G_{Hd}$ $G_{Id}$ $G_{Jd}$ $G_{Kd}$ $G_{Ld}$ $G_{Zd}$ $G_{Nd}$ $G_{Od}$ $G_{Pd}$

$G_{Qd}$   o    o    o    o    o    o    o    o

$G_{Rd}$   o    o    o    o    o    o    o    o

$G_{Sd}$   o    o    o    o    o    o    o    o

$G_{Td}$   o    o    o    o    o    o    o    o

$G_{Ud}$   o    o    o    o    o    o    o    o

$G_{Vd}$   o    o    o    o    o    o    o    o

$G_{Wd}$   o    o    o    o    o    o    o    o

$G_{Xd}$   o    o    o    o    o    o    o    o

# FIG.8

Gradients

Gradients to extrapolate

**direction 0**
vertical

**direction 1**
horizontal

**direction 3**
diagonal down-left

**direction 4**
diagonal down-right

**direction 5**
vertical right

**direction 6**
horizontal down

**direction 7**
vertical left

**direction 8**
horizontal up

EP 3 032 830 A1

FIG.9

x x x x x x x x x x x x x x x x x x x

x o o o o o o o o

x o o o o o o o o

x o o o o o o o o

x o o o o o o o o

x o o o o o o o o

x o o o o o o o o

x o o o o o o o o

x o o o o o o o o

x

x

# FIG.10A

START

FOR EACH BLOCK
TO ENCODE

~S100

CALCULATE, FOR CURRENT BLOCK, VIRTUAL
GRADIENT VALUES DEPENDING ON NEIGHBORING
GRADIENT VALUES COMPUTED IN CAUSAL
NEIGHBORHOOD OF CURRENT BLOCK, AND
ACQUIRE ONE "PREDICTION DIRECTION OR
NON-DIRECTIONAL INTRA PREDICTION MODE"

~S200E

DETERMINE "CODING MODE" BY COMPARING
DIFFERENT PREDICTIONS FOR BLOCK TO
ENCODE, ACQUIRE PREDICTED BLOCK BY
APPLYING "CODING MODE", ACQUIRE RESIDUAL
ERROR BETWEEN CURRENT BLOCK AND
PREDICTED BLOCK, AND ENCODE DIFFERENCE
BETWEEN DETERMINED CODING MODE AND
ACQUIRED "PREDICTION DIRECTION OR NON
DIRECTIONAL INTRA PREDICTION MODE" AND
RESIDUAL ERROR

END

# FIG.10B

START

FOR EACH BLOCK
TO DECODE

S100

CALCULATE, FOR CURRENT BLOCK, VIRTUAL
GRADIENT VALUES DEPENDING ON NEIGHBORING
GRADIENT VALUES COMPUTED IN CAUSAL
NEIGHBORHOOD OF CURRENT BLOCK, AND
ACQUIRE ONE "PREDICTION DIRECTION OR
NON-DIRECTIONAL INTRA PREDICTION MODE"

S200D

DECODE DIFFERENCE TO ACQUIRE "CODING
MODE" WITH HELP OF ACQUIRED "PREDICTION
DIRECTION OR NON-DIRECTIONAL INTRA
PREDICTION MODE", ACQUIRE PREDICTED
BLOCK BY APPLYING "CODING MODE", DECODE
RESIDUAL ERROR, AND ADD RESIDUAL ERROR
TO PREDICTED BLOCK TO ACQUIRE CURRENT
BLOCK

END

# FIG.11

START

FOR EACH
PREDICTION DIRECTION

~S110

COMPUTE NEIGHBORING GRADIENT VALUES
IN CAUSAL NEIGHBORHOOD

~S120

PROPAGATE NEIGHBORING GRADIENT VALUES
ALONG PREDICTION DIRECTION TO ESTIMATE
VIRTUAL GRADIENT VALUES IN BLOCK AND
SUM UP VIRTUAL GRADIENT VALUES TO
ACQUIRE ENERGY

~S130

DETERMINE ONE "PREDICTION DIRECTION OR
NON-DIRECTIONAL INTRA PREDICTION MODE"

END

# FIG.12

START

~S131

ACQUIRE ENERGY FOR DC MODE BASED ON
ENERGIES ACQUIRED FROM STEPS S110-S120

~S132

DETERMINE ONE "PREDICTION DIRECTION OR
DC MODE" HAVING HIGHEST ENERGY FROM
AMONG THOSE ACQUIRED FROM STEPS
S110-S120 AND S131

END

# FIG.13

START

S133
ACQUIRE ENERGIES FOR
NON-DIRECTIONAL INTRA
PREDICTION MODES BASED
ON ENERGIES ACQUIRED
FROM STEPS S110-S120

S134
ONE PREDICTION DIRECTION HAS
HIGHEST ENERGY FROM AMONG THOSE ACQUIRED
FROM STEPS S110-S120 AND S131 ?

NO

YES

S135
DETERMINE THE ONE
PREDICTION DIRECTION AS
ONE "PREDICTION DIRECTION
OR NON-DIRECTIONAL INTRA
PREDICTION MODE"

S136
APPLY RULE IN HEVC
STANDARD TO ACQUIRE ONE
"PREDICTION DIRECTION OR
NON-DIRECTIONAL INTRA
PREDICTION MODE"

END

# FIG.14

START

S133

ACQUIRE ENERGIES FOR NON-DIRECTIONAL INTRA PREDICTION MODES BASED ON ENERGIES ACQUIRED FROM STEPS S110-S120

S134

ONE PREDICTION DIRECTION HAS HIGHEST ENERGY FROM AMONG THOSE ACQUIRED FROM STEPS S110-S120 AND S131 ?

NO

YES

S135

DETERMINE THE ONE PREDICTION DIRECTION AS ONE "PREDICTION DIRECTION OR NON-DIRECTIONAL INTRA PREDICTION MODE"

S137

SELECT DC OR PLANAR MODE HAVING MINIMUM ESTIMATION ERROR ON RECONSTRUCTED NEIGHBORHOOD OF BLOCK AS ONE "PREDICTION DIRECTION OR NON-DIRECTIONAL INTRA PREDICTION MODE"

END

FIG.15

EP 3 032 830 A1

EP 3 032 830 A1

# FIG.16

**Europäisches Patentamt**
**European Patent Office**
**Office européen des brevets**

# EUROPEAN SEARCH REPORT

Application Number

EP 14 30 6968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAANI (SONY) E ET AL: "CE6.c: Differential Coding of Intra Modes", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F566, 2 July 2011 (2011-07-02), XP030009589, | 1-3,7-9, 13,14 | INV. H04N19/11 H04N19/14 H04N19/176 H04N19/463 |
| Y A | * page 1; figures 1,2 * | 4,10 5,6,11, 12 | |
| X,D | WO 2010/102935 A1 (THOMSON LICENSING [FR]; THOREAU DOMINIQUE [FR]; FRANCOIS EDOUARD [FR];) 16 September 2010 (2010-09-16) | 1-4, 7-10,13, 14 | |
| Y | * page 7, line 7 - line 17 * * page 8, line 25 - line 26 * * page 9, line 1 - line 6 * | 4,10 | |
| X | MAANI E ET AL: "Differential coding of intra modes (DCIM)", 2. JCT-VC MEETING; 21-7-2010 - 28-7-2010; GENEVA; (JOINT COLLABORATIVETEAM ON VIDEO CODING OF ISO/IEC JTC1/SC29/WG11 AND ITU-T SG.16 ); URL:HTTP://WFTP3.ITU.INT/AV-ARCH/JCTVC-SITE/,, no. JCTVC-B109, 24 July 2010 (2010-07-24), XP030007688, ISSN: 0000-0046 | 1-3,7-9, 13,14 | TECHNICAL FIELDS SEARCHED (IPC) H04N |
| Y | * page 1 - page 2; figure 1 * | 4,10 | |
| X | EP 2 063 644 A2 (HITACHI LTD [JP]) 27 May 2009 (2009-05-27) | 1-3,7-9, 13,14 | |
| Y | * paragraph [0010]; figure 8 * | 4,10 | |

The present search report has been drawn up for all claims

| Place of search | Date of completion of the search | Examiner |
|---|---|---|
| Munich | 8 May 2015 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6968

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2015

| Patent document cited in search report | | Publication date | Patent family member(s) | | Publication date |
|---|---|---|---|---|---|
| WO 2010102935 | A1 | 16-09-2010 | TW<br>WO | 201034467 A<br>2010102935 A1 | 16-09-2010<br>16-09-2010 |
| EP 2063644 | A2 | 27-05-2009 | CN<br>EP<br>JP<br>US | 101426141 A<br>2063644 A2<br>2009111691 A<br>2009110070 A1 | 06-05-2009<br>27-05-2009<br>21-05-2009<br>30-04-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010102935 A1

**Non-patent literature cited in the description**

- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012
- **G.SULIVAN ; J.OHM ; W.J HAN ; T. WIEGAND.** Overview of the High efficiency Video Coding (HEVC) standard. *TCSVT,* 2012, http://iphome.hhi.de/wiegand/ assets/pdls/2012_12_IEEE-HEVC-Overview.pdf
- **G.SULIVAN ; J.OHM ; W.J HAN ; T. WIEGAND.** Overview of the High efficiency Video Coding (HEVC) standard. *TCSVT,* 2012, 1658, http://iphome.hhi.de/wiegand/assets/pdfs/ 2012_12_IEEE-HEVC-Overview.pdf
- **THOMAS WIEGAND ; BEMD GIROD.** Lagrange Multiplier Selection in Hybrid Video Coder Control. *Image processing IEEE,* 2001